Europäisches Patentamt

European Patent Office

Office européen des brevets

(11) Veröffentlichungsnummer: **0 388 395**
**A1**

(12) # EUROPÄISCHE PATENTANMELDUNG

(21) Anmeldenummer: 90890037.6

(22) Anmeldetag: 16.02.90

(51) Int. Cl.⁵: **C10J 3/57, C21B 13/14**

(30) Priorität: 16.02.89 AT 350/89

(43) Veröffentlichungstag der Anmeldung:
**19.09.90 Patentblatt 90/38**

(84) Benannte Vertragsstaaten:
**AT BE CH DK ES FR GB GR IT LI LU NL SE**

(71) Anmelder: **VOEST-ALPINE INDUSTRIEANLAGENBAU GESELLSCHAFT m b.H.**
**Turmstrasse 44**
**A-4020 Linz(AT)**

Anmelder: **VOEST-ALPINE STAHL AKTIENGESELLSCHAFT**
**Turmstrasse 45**
**A- 4020 Linz a.d. Donau(AT)**

(72) Erfinder: **Faltejsek, Karl, Dipl.-Ing.**
**Lüfteneggerstrasse 6**
**A-4020 Linz(AT)**
Erfinder: **Kepplinger, Werner, Dipl.-Ing. Dr.**
**Lahholdstrasse 7**
**A-4020 Linz(AT)**

(74) Vertreter: **Kretschmer, Adolf, Dipl.-Ing. et al**
**Patentanwälte Dipl.Ing. A. Kretschmer Dr.**
**Thomas M. Haffner Schottengasse 3a**
**A-1014 Wien(AT)**

(54) **Verfahren zur Erzeugung von brennbaren Gasen in einem Einschmelzvergaser.**

(57) Bei einem Verfahren zur Erzeugung von brennbaren Gasen in einem mit Sauerstoff bzw. mit Sauerstoff angereicherter Luft betriebenen Einschmelzvergaser (1), in welchen vorreduzierte, vorzugsweise eisenhaltige Erze (13), Kohle (4) und Schlackenbildner (15) eingebracht werden und aus welchem Schmelze (6), flüssige Schlacke (7) sowie brennbares Gas (8) abgezogen werden, wobei Kohle in einer die für die Schmelzreduktion benötigte Menge übersteigenden und variablen Menge zur Erzeugung von brennbaren Gasen (8) eingesetzt wird, wird das erzeugte brennbare Gas in wenigstens zwei Teilströme (9,10) geteilt. Dabei wird ein erster Teilstrom (9) des erzeugten, brennbaren Gases (8) zur Vorreduktion (2) des dem Einschmelzvergaser (1) zuzuführenden Erzes (13) eingesetzt und es wird der die für die Vorreduktion (2) benötigte Teilmenge des Gases übersteigende Anteil des brennbaren Gases einem Entschwefelungsreaktor (3) zugeführt, aus welchem die Umsetzungsprodukte der Entschwefelungsreduktion sowie nicht vollständig umgesetzte Schlackenbildner abgezogen und dem Einschmelzvergaser (1) als Schlackenbildner (15) zugeführt werden.

FIG. 1

## Verfahren zur Erzeugung von brennbaren Gasen in einem Einschmelzvergaser

Die Erfindung bezieht sich auf ein Verfahren zur Erzeugung von brennbaren Gasen in einem mit Sauerstoff bzw. mit Sauerstoff angereicherter Luft betriebenen Einschmelzvergaser in welchem vorreduzierte, vorzugsweise eisenhaltige Erze, Kohle und Schlackenbildner eingebracht werden und aus welchem Schmelze, flüssige Schlacke sowie brennbares Gas abgezogen werden, wobei Kohle in einer die für die Schmelzreduktion benötigte Menge übersteigenden variablen Menge zur Erzeugung von brennbaren Gasen eingesetzt wird.

Für den Betrieb von Einschmelzvergasern ist es bekannt, Kohle geeigneter Körnung zur Aufrechterhaltung einer Kohlewirbelschicht in den Kopf eines Einschmelzvergasers einzubringen, wobei diese Kohle vergast wird. Die Vergasungsreaktion erfordert zur Erzielung der gewünschten Schmelztemperatur Sauerstoff, wobei weitgehend reiner Sauerstoff, d.h. mit wenig Stickstoff, bei den üblicherweise angewandten Drücken in einem Einschmelzvergaser eingesetzt werden muß. Das Druckniveau in einem Einschmelzvergaser ist zumindest teilweise durch die Besonderheiten der Ausbringung des Schmelzbades vorgegeben und es können derartige Einschmelzvergaser nicht mit beliebig hohen Drücken betrieben werden, wenn gleichzeitig auf die Erfordernisse des Schmelzprozesses Rücksicht genommen werden soll. Einschmelzvergasungsprozesse, bei welchen gleichzeitig Flüssig-Roheisen gewonnen wird, erlauben es auch, schwefelhaltige Kohlen einzusetzen, da es im Rahmen eines Einschmelzvergasungsprozesses möglich wird, den entstehenden Schwefelwasserstoff im nachfolgenden Reduktionsschacht an eben reduziertes Eisen zu binden und das entstandene FeS durch die Wirbelschicht bis in den Flüssigsumpf gelangen zu lassen und dort, mit freiem CaO der Schlacke, als CaS, in die Schlacke überzuführen. Bei den üblichen Einschmelzvergasungsprozessen wird das entstehende brennbare Vergasungsprodukt in kalorischen Maschinen bzw. Brennkammern für verschiedene Zwecke ausgenützt.

Innerhalb eines Einschmelzvergasers wird mit Ausnahme von Einschmelzvergasern, welche auf keinen Roheisenabstich Rücksicht zu nehmen haben, im Druckbereich bis maximal 8 bar, zumeist 4 bis 6 bar gearbeitet, um das intermittierende Ausbringen der Schmelze nicht zu beeinträchtigen.

Das bei derartigen Einschmelzvergasungsprozessen auf Grund der metallurgischen Notwendigkeiten gebildete Gas kann in der Folge zur Erzeugung von elektrischer Energie herangezogen werden, wobei jedoch auf Grund der metallurgischen Notwendigkeiten nur in beschränktem Maß auf die Erfordernisse einer nachfolgenden Energieerzeugung, insbesondere auf die Erfordernisse eines Kraftwerkes Rücksicht genommen werden kann. Für Kraftwerke ist es von ausschlaggebener Bedeutung die Gaserzeugung an die jeweils geforderte Leistung der Energieerzeugung anzupassen und es werden daher oft für Kraftwerke Druckvergasungsverfahren eingesetzt, bei welchen auf metallurgische Bedürfnisse für die Schmelzreduktion von Erzen bzw. vorreduzierten Metallen nicht Rücksicht genommen werden muß.

Druckvergasungsverfahren für Kohle für den Betrieb von Kraftwerken sind in verschiedener Ausbildung bekannt. Als dafür besonders geeignet werden in diesem Zusammenhang Flugstromvergaser vorgeschlagen, deren Brennern feingemahlener Kohlestaub gemeinsam mit Sauerstoff hoher Konzentration zugeführt werden muß. Die Verweilzeit bzw. Reaktionszeit bei derartigen Flugstromvergasern ist relativ kurz und die mit derartigen Flugstromvergasern erzielten Vergasungsprodukte enthalten eine Reihe von Schadstoffen, insbesondere Schwefelverbindungen, welche eine aufwendige Nachreinigung des Produktgases erforderlich machen. Diese Flugstromvergaser müssen mit Sauerstoff betrieben werden, um ausreichende Vergasung in diesen kurzen Verweilzeiten sicherzustellen und den Kohlenstoffaustrag mit der Schlacke zu beschränken.

Die Erfindung zielt nun darauf ab, ein Verfahren der eingangs genannten Art zu schaffen, mit welchem gleichzeitig den metallurgischen Bedürfnissen für den Schmelzreduktionsprozeß und den energetischen Bedürfnissen einer nachfolgenden Kraftwerksanlage Rechnung getragen werden kann. Zur Lösung dieser Aufgabe besteht das erfindungsgemäße Verfahren im wesentlichen darin, daß das erzeugte Gas in wenigstens zwei Teilströme geteilt wird, daß ein erster Teilstrom des erzeugten brennbaren Gases zur Vorreduktion des dem Einschmelzvergaser zuzuführenden Erzes eingesetzt wird und daß der die für die Vorreduktion benötigte Teilmenge des Gases übersteigende Anteil des brennbaren Gases einem Entschwefelungsreaktor zugeführt wird, aus welchem die Umsetzungsprodukte der Entschwefelungsreduktion sowie nicht vollständig umgesetzte Schlackenbildner abgezogen und dem Einschmelzvergaser zugeführt werden. Dadurch, daß das im Einschmelzvergaser erzeugte brennbare Gas in wenigstens zwei Teilströme geteilt wird, läßt sich eine den Bedürfnissen für eine Vorreduktion des Einsatzmateriales Rechnung tragende Teilmenge des brennbaren Gases für die Vorreduktion verwenden, wobei im Vorreduktionsprozeß gleichzeitig eine Abbindung von in den brennbaren Gasen enthaltenem Schwefel erfolgt. Im Vorreduktionsprozeß werden üblicherweise Schlackenbildner für die nachfolgende Einschmelzvergasung zugesetzt. Dabei kann der Vorreduktionsprozeß izi einer Weise gefahren werden, daß die für den Betrieb des Einschmelzvergaser erforderlichen Parameter, insbesondere für die Entschwefelung der Schmelze, das heißt den Übergang des Schwefels von FeS in der metallischen Schmelze in die Schlacke, die notwendige Schlackenbasizität aufrechterhalten wird, und es kann gleichzeitig mit diesem Teilstrom sichergestellt werden, daß bei der Vorreduktion Eisencarbidanteile gebildet werden, welche nachfolgend die Aufkohlung des Bades im Einschmelzvergaser auf die gewünschten Werte einzustellen erlaubt. Der für den Kraftwerksbetrieb erforderliche überschüssige Anteil an brennbaren Gasen muß hiebei nicht durch den Vorreduktionsofen geführt werden und insbesondere wenn für die Regelung des Kraftwerksbetriebes unterschiedliche Mengen Überschußgas kurzfristig und regelbar erzeugt werden sollen, kann durch die Abzweigung dieses überschüssigen Teilstromes sichergestellt werden, daß der Vorreduktionsprozeß unabhängig von der jeweils erzeugten Gasmenge in der metallurgisch notwendigen Weise gefahren wird. Die Überschußmenge wird nun erfindungsgemäß als zweiter Teilstrom einem gesonderten Entschwefelungsreaktor zugeführt und die Maßnahme, diese Überschußmenge gesondert vom Vorreduktionsofen zu entschwefeln, erlaubt es, bei unterschiedlichem Kohleeinbringen für die Erzeugung unterschiedlicher Gasmengen immer noch den metallurgischen Notwendigkeiten des Einschmelvergasers Rechnung zu tragen. Zu diesem Zweck werden im Entschwefelungsreaktor gleichfalls Schlackenbildner eingesetzt und, da durch Steigerung der dem Einschmelzvergaser zugeführten Brennstoffmenge eine Veränderung der Schlackenbasizität im Einschmelzvergaser entstehen würde, kann aus dem Entschwefelungsreaktor eine zur Kompensation benötigte Schlackenbildnerteilmenge abgezogen werden und dem Einschmelzvergaser zugeführt werden. Da jedoch über den Entschwefelungsschacht, im Gegensatz zum Reduktionsschacht, keine zu verschlackende Gangart miteingebracht wird, so würde sich durch das Fehlen der in der Gangart enthaltenen Elemente die Schlackenanalyse und -basizität ändern. Um dem entgegenzuwirken, werden die Schlackenbildner im Entschwefelungsschacht in anderer Zusammensetzung aufgegeben, insbesondere was das Verhältnis $CaCO_3$ zu $MgCO_3$ bzw. Anteile an $Al_2O_3$ oder $SiO_2$ betrifft. Insgesamt erlaubt somit die Unterteilung der erzeugten Gasmenge in zwei Teilströme die Aufrechterhaltung der metallurgisch notwendigen Schlackenbasizität und ermöglicht gleichzeitig eine rasche und kurzfristig veränderliche Erzeugung von brennbaren Gasen für einen Kraftwerksbetrieb, ohne daß hiedurch der metallurgische Prozeß beeinträchtigt würde.

Eine optimale Regelung der metallurgischen Bedürfnisse des Einschmelzvergasers kann hiebei dadurch sichergestellt werden, daß der Feststoffstrom der aus dem Entschwefelungsreaktor abgezogenen und dem Einschmelzvergaser zugeführten Schlackenbildner so eingestellt wird, daß die Schlacke dieselbe Schlackenbasizität ergibt wie die primäre Schlacke, welche aus der Kohleasche, den Erzbegleitern, sowie den mit dem Erz in die Vorreduktion aufgegebenen stückigen, vorzugsweise karbonatischen Schlackenbildnern gebildet wird.

In besonders vorteilhafter Weise wird das erfindungsgemäße Verfahren hiebei so durchgeführt, daß der Strom der Kohle zum Einschmelzvergaser und der Strom der Feststoffe vom Entschwefelungsreaktor zum Einschmelzvergaser über regelbare Feststoffzuteiler in mengenmäßige Abhängigkeit voneinander eingestellt werden. Die Regelung der Mengenströme der Feststoffe für die Kammer des Einschmelzvergasers und der Feststoffe, welche in der Folge als kompensierende Menge an Schlackenbildner dem Einschmelzvergaser zugeführt wird, erlaubt es, kurzfristigen Änderungen der Bedürfnisse Rechnung zu tragen. Eine Änderung der zugeführten Menge an vorreduziertem Material könnte eine derartige kurzfristige Kompensation nicht zuletzt deshalb nur unvollständig bieten, da für die Vorreduktion bestimmte Durchlaufzeiten, beispielsweise 6 bis 8 Stunden erforderlich sind und eine kurzfristige Anpassung über diesen Weg daher nicht möglich wäre. Erst durch die kompensierende Korrektur durch gleichzeitige Veränderung von Brennstoffmenge und gesondert zugeführter Menge an Schlackenbildnern aus dem Entschwefelungsreaktor läßt sich eine derartige kurzfristige Anpassung erzielen, wobei gleichzeitig der Vorteil erreicht wird, daß die Entschwefelung dieses Teilstromes weitestgehend über die Schlackenbildner erfolgt und die Gefahr herabgesetzt wird, daß das Schmelzbad mit Schwefel angereichert wird.

Um nun gleichzeitig den Bedürlnissen des Entschwefelungsreaktors und den Bedürfnissen des Vorreduktionsofens optimal Rechnung zu tragen, kann das erfindungsgemäße Verfahren mit Vorteil so durchgeführt werden, daß dem Entschwefelungsreaktor $MgCO_3$ und $CaCO_3$ in einem Mengenverhältnis zugeführt wird, welches von dem Mengenverhältnis, welches bei der Vorreduktion aufgegeben wird, verschieden ist.

Der Einschmelzvergaser muß, um höhere Kohlenwasserstoffe aus der Entgasung der in ihn aufgegebenen Kohle sowie bei der Ent- bzw. Vergasung entstehende Kohlenstoff-Stickstoffverbindungen im Vergaserkopf thermisch zersetzen zu können, mit Gasaustrittstemperaturen von mindestens etwa 1.000° C gefahren werden.

Für die Vorreduktion ist es hiebei von wesentlicher Bedeutung, daß das eingeleitete Reduktionsgas, nämlich das erzeugte brennbare Gas, auf metallurgisch notwendige Temperaturen gekühlt wird, wobei weiters erforderlich ist, den Anteil an reduzierenden Bestandteilen des brennbaren Gases weitestgehend konstant zu halten. Zur Kühlung der dem Vorreduktionsofen zugeführten Teilmenge des brennbaren Gases soll somit möglichst nicht das aus dem Vorreduktionsofen abgezogene bereits in höherem Maße $CO_2$-haltige Gas herangezogen werden, sondern gleichfalls ein etwa die gleiche Konzentration an CO enthaltendes Gas eingesetzt werden. Dies kann in besonders vorteilhafter Weise dadurch verwirklicht werden, daß der Teilmenge des Gases, welche der Vorreduktion zugeführt wird, nach dem Entschwefelungsreaktor abgezogenes gekühltes und gereinigtes brennbares Gas zugemischt wird.

Gemäß einer bevorzugten Vorgangsweise wird das den Entschwefelungsreaktor verlassende Gas in einem Strahlungswärme tauscher unter Erzeugung von Hochdruckdampf vorgekühlt, in Fliehkraftabscheidern entstaubt, in Konvektionswärmetauschern unter Erzeugung von Hochdruck- und Mitteldruckdampf weiter abgekühlt, in einer letzten Stufe durch Wärmeabgabe an Niederdruckdampf oder Speisewasser endgekühlt und anschließend gewaschen. Damit ist das Gas in weiterer Folge in Gasturbinen verarbeitbar.

Ein kleiner Teilstrom dieses Gases wird verdichtet und dem zuvor genannten Teilstrom des Gases zugemischt, der der Vorreduktion zugeführt wird.

In ähnlicher Weise werden, wie dies einer weiteren bevorzugten Ausführungsform entspricht, auch die kühleren Abgase der Vorreduktionsstufe behandelt, wobei so vergegangen wird, daß der in der Vorreduktion eingesetzte Teilgasstrom nach Verlassen des Reduktionsschachtes ın Fliehkraftabscheidern entstaubt, in Konvektionswärmetauschern unter Erzeugung von Mitteldruckdampf gekühlt, in einer weiteren Kühlstufe unter Wärmeabgabe an Niederdruckdampf oder Speisewasser endgekühlt und abschließend gewaschen wird. Ein Teilstrom dieses Gases wird, wie später beschrieben, zur Regelung der Austrittstemperatur aus dem Einschmelzvergaser herangezogen.

Die Vorreduktion wird hiebei in der Regel bei gegenüber den Austrittstemperaturen des brennbaren Gases aus dem Einschmelzvergaser deutlich verringerten Temperaturen vorgenommen, wobei vorzugsweise der für die Vorreduktion eingesetzte Teilgasstrom auf etwa 850° C gekühlt wird. Demgegenüber kann der Entschwefelungsprozeß im Entschwefelungsreaktor bei den deutlich höheren Austrittstemperaturen des brennbaren Gases aus dem Einschmelzvergaser unmittelbar vorgenommen werden, wodurch die Wirksamkeit der Entschwefelung verbessert wird.

Auf Grund der Teilung des erzeugten Gases in wenigstens zwei Teilströme wird die Möglichkeit geschaffen, ohne Beeinträchtigung des metallurgischen Prozesses in weiten Grenzen die jeweils erforderliche Brenngasmenge für das kalorische Kraftwerk kurzfristig den Bedürfnissen anzupassen, wobei zur Aufrechterhaltung der metallurgischen Notwendigkeiten mit Vorteil so vorgegangen wird, daß der in der Vorreduktion eingesetzte Gasstrom 25 bis 95%, vorzugsweise 40 bis 80%, des erzeugten brennbaren Gasstromes beträgt.

Um der Zusammensetzung, d.h. den Gehalt an CH- und CN-Verbindungen des im Einschmelzvergaser bei stark schwankenden Kohlemengen produzierten brennbaren Gases korrekt Rechnung zu tragen, ist es auch erforderlich, eine Regelung der Temperatur der den Einschmelzvergaser verlassenden Gase vorzunehmen. Insbesondere bei der Erzeugung einer großen Gasmenge für den nachgeschalteten Krafmerksbetrieb kommt es zu deutlichen Temperaturerhöhungen am Vergaserkopf, welche auf diese Weise wirksam kompensiert werden müssen.

Für die Vergasung der Kohle im Einschmelzvergaser können konventionelle Vezgasungsmittel eingesetzt werden, wobei mit Vorteil als Vergasungsmittel in den Einschmelzvergaser reiner Sauerstoff und/oder Sauerstoff mit Reststickstoffgehalten um 10 % und/oder ein $O_2$-Wasserdampfgemisch und/oder ein Gemisch aus Heißluft und $O_2$ und/oder neben Sauerstoff als weiterer Sauerstoffträger in rezirkuliertem Abgas aus der Reduktionsstufe enthaltenes $CO_2$ eingesetzt wird.

Insbesondere beim Einsatz von Abgas aus der Vorreduktionsstufe als Vergasungsmittel ergibt sich hiebei der energetische Vorteil, daß überschüssige fühlbare Wärme des Gases über jenem Temperaturniveau, das zur Zerlegung von CH-bzw. CN-Verbindungen im Vergaserraum notwendig ist, insbesondere 1.000° C, verbraucht und in Heizwert des erzeugten Gases umgesetzt wird. Dabei regiert $CO_2$ aus dem rezirkulierten Abgas aus der Vorreduktionsstufe wärmeverbrauchend im Wirbelbett des Einschmelzvergasers mit C zu 2 CO.

Durch die in weiten Grenzen frei wählbare Brenngaserzeugung steht naturgemäß bei höherer Brenngaserzeugung ein höherer Anteil an fühlbarer Wärme zur Verfügung, welcher gleichfalls zur Aufrechterhaltung der gewünschten Temperaturen herangezogen werden kann. Mit Vorteil wird hiebei so vorgegangen, daß bei Einsatz von Heißluft und $O_2$ als Vergasungsmittel in den Einschmelzvergaser die Heißluft durch Wärmeaustausch gegen heiße Gase oder durch Verbrennung einer kleinen Brennstoff-, vorzugsweise Gasmenge in dem dem Vergaser zuzuführenden Luftstrom erwärmt wird.

Für einen nachgeschalteten Kraftwerksbetrieb mit stark variabler Netzleistungsabgabe und im besonderen zur gleichzeitigen Erzeugung des benötigten Sauerstoffs für den Einschmelzvergasungsprozeß in einer Luftzerlegungsanlage, kann der apparative Aufwand dadurch wesentlich herabgesetzt werden, daß das erzeugte Gas größtenteils einem Gasturbinen-Dampfkraftwerk zugeführt wird, wobei bei Mindestlast in diesem Kraftwerk die brennbaren Abgase aus der Reduktionsstufe teilweise oder zur Gänze in der (den) Brennkammer(n) einer Gasturbine verfeuert werden, aus deren heißen Abgasen Dampf erzeugt wird, welcher in einer Dampfturbine gemeinsam mit Dampf aus der Kühlung heißer Gasströme verarbeitet wird, und wobei bei Voll-Last des Kraftwerkes zusätzlich das aus der Vergasung nicht für den Betrieb der Reduktionsstufe notwendiger Kohle herrührende Gas überwiegend oder zur Gänze zur Stromerzeugung verwendet wird, und daß dazu mindestens eine weitere Gasturbine betrieben wird.

Dadurch, daß alle Elemente jeweils nur einfach vorhanden sind, ausgenommen die Gasturbinen, kann der apparative Aufwand wesentlich herabgesetzt werden. Von den Gasturbinen wäre z.B. zur Verarbeitung des Gases, das aus der metallurgisch notwendigen Kohle entsteht, nur eine in Betrieb, bei Voll-Last des Kraftwerkes jedoch zwei oder mehr.

Diese nur einfach vorgesehenen Elemente eines Kraftwerkes sind im wesentlichen der Gasverdichter, der Dampfturbinensatz, der Hauptluftverdichter zur Kompression des größten Teiles der zu zerlegenden Luft sowie der Tieftemperatur-Luftzerleger selbst. Verdichter lassen sich üblicherweise nur in engen Grenzen an unterschiedliche Durchsatzmengen anpassen, da ihr Wirkungsgrad bei Verlassen dieser Grenzen deutlich absinkt. Es ist daher vorteilhaft, zusätzlich zum Gasverdichter einen drehzahlgeregelten Gasvorverdichter vorzusehen, wobei bevorzugt so vorgegangen wird, daß das brennbare Gas der (den) Brennkammer(n) einer (den) Gasturbine(n) durch einen Gasverdichter zugeführt wird, der bei Voll-Last des Kraftwerkes durch einen vorzugsweise drehzahlgeregelten Gasvorverdichter unterstützt wird, wodurch bei Voll-Last des Kraftwerkes das vom Gasverdichter angesaugte Gasvolumen deutlich herabgesetzt wird und so ein wirtschaftlicher Betrieb dieses Verdichters sichergestellt wird. Hiebei genügt es, wenn der drehzahlgeregelte Gasvorverdichter bei Voll-Last des Gasturbinen-Dampfkraftwerkes etwa 20% der gesamten Verdichterarbeit leistet, wie dies einer weiteren bevorzugten Ausführungsform entspricht.

Gasturbinen sind für Erdgas- bzw. Heizölbetrieb konstruiert. Diese Brennstoffe bestimmen das Verhältnis des Massendurchsatzes im Verdichter bzw. in der Turbine. Kohlegas hat jedoch ein deutlich erhöhtes spezifisches Gewicht und wesentlich kleineren Heizwert, so daß der Massestrom des Gases um den Faktor 5 bis 10 (für das Abgas der Reduktionsstufe) größer ist als der, für den die Turbinen konstruiert sind. Um die Turbinen im wesentlichen unverändert beibehalten zu können, wird ein Teilstrom der verdichteten Luft nicht der Verbrennung in der Brennkammer bzw. der Kühlung der Gasturbine zugeführt, sondern aus der Brennkammer entnommen. Mit Vorteil wird dabei so vorgegangen, daß aus der (den) Brennkammer(n) der Gasturbine(n) Druckluft entnommen, gekühlt und zur Gänze der Luftzerlegungsanlage zugeführt wird, wobei mindestens bei Voll-Lastbetrieb des Kraftwerkes ein Teilstrom dieser Luft, vorzugsweise in einer arbeitsleistenden Turbine, auf das Druckniveau entspannt wird, das zur Erzeugung praktisch druckloser Produkte in der Luftzerlegungsanlage notwendig ist, und wobei dieser teilentspannte Druckluftstrom der Luftzerlegung gemeinsam mit einem weiteren Druckluftstrom der Luftzerlegungsanlage zugeführt wird, den ein weiterer, vorzugsweise von der Dampfturbine angetriebener Luftverdichter auf ein zur Luftzerlegung notwendiges Druckniveau fördert, wobei insbesondere das Verfahren so durchgeführt wird, daß der Teilstrom an aus der (den) Brennkammer(n) der Gasturbine(n) entnommenen Druckluft, der nicht über die arbeitsleistende Turbine entspannt wird, im Luftzerleger im Gegenstrom zu flüssig verdichtetem Sauerstoff kondensiert, als Flüssigkeit entspannt und in den Sumpf der Zerlegungskolonne des Luftzerlegers eingespeist wird.

Im wesentlichen vergrößern sich mit steigender Last des Gasturbinen-Dampfkraftwerkes und damit der zu vergasenden Kohlemenge auch der Gasmassenstrom und Sauerstoffbedarf, jedoch nicht annähernd proportional. Insbesondere wächst der Sauerstoffbedarf unterproportional, weil der Anteil von Dampf oder rezirkuliertem $CO_2$ aus dem Abgas der Reduktionsstufe als Sauerstoffträger überproportional zunimmt, während andererseits die mit höchstem spezifischem Sauerstoffbedarf vergaste, metallurgisch notwendige Kohle nur zu etwa 40 oder 50 % ihres Heizwertes als Brenngas zur Verfügung steht.

Dagegen würde der Hauptluftverdichter, der zweckmäßigerweise bei starrer Drehzahl von der Dampfturbinenwelle angetrieben wird, bei hoher Kraftwerks- und damit Luftzerlegerleistung in einem unwirtschaftlichen Überlastbetrieb zu fahren sein.

Um diese Effekte zu minimieren, wird aus den Gasturbinen ein höherer Luftstrom als für die Verdampfung des Sauerstoffes notwendig abgezogen und diese zusätzlich entnommene Luftmenge in einer Luftexpansionsturbine arbeitsleistend auf das Druckniveau des Hauptluftverdichters entspannt und gemeinsam mit der vom Hauptluftverdichter geförderten Luft wie diese im Luftzerleger zerlegt. Dabei werden beide Entnahmeluftströme aus den Gasturbinen, der direkt eingesetzte und der zuvor über die Luftexpansionsturbine geführte, unter Erzeugung von vorzugsweise Hochdruck- und Mitteldruckdampf gekühlt und anschließend entsprechend gereinigt.

In den Brennkammern der Gasturbine(n) entstehen trotz des z.B. gegenüber Erdgas wesentlich geringeren Heizwertes des Kohlengases in erheblichem Maße thermische Stickoxide. Die für Erdgasbrenner verfügbaren verbrennungstechnischen Maßnahmen, wie Vormischung des Gases mit Luft, sind hier wegen des Wasserstoffgehaltes der Kohlegase nicht anwendbar. Es muß daher durch wirksame Kühlung des Flammenkernes der Bildung thermischer Stickoxide entgegengewirkt werden. Dabei wird bevorzugt so vorgegangen, daß dem der (den) Brennkammer(n) der Gasturbine(n) zuzuführenden Brenngas oder den Brennern Dampf zugeführt und/oder demk Brenngas verdichteter Stickstoff aus der Luftzerlegung beigemischt wird.

Zweckmäßigerweise geschieht dies bei Teillast des Gasturbinen-Dampfkraftwerkes, das heißt bei Verstromung lediglich der Abgase der Reduktionsstufe, dadurch, daß Dampf in die Brenner der Gasturbinenbrennkammern mitaufgegeben wird. Durch die hohe spezifische Wärme und Dissoziationswärme des Dampfes wird die Bildung thermischer Stickoxide nachhaltig reduziert, so daß die Abgase der Gasturbine ohne weitere Reduzierung der $NO_x$-Fracht, z.B. durch katalytische Umsetzung mit $NH_3$, in die Atmosphäre abgegeben werden können.

Bei Voll-Last des Gasturbinen-Dampfkraftwerkes bringt der höhere Heizwert des Brenngases eine überproportionale und nicht mehr wirtschaftliche Erhöhung der Dampfraten zum Unterdrücken der Stickoxidbildung in den Brennern. Um den entgegenzuwirken, entnimmt man zweckmäßigerweise dem in diesem Lastfall ebenfalls mit Voll-Last fahrenden Luftzerleger Stickstoff, verdichtet diesen auf das Druckniveau in den Gasturbinenbrennkammern und mischt ihn zum Brenngas. Der so drastisch herabgesetzte Heizwert des Kohlegases ermöglicht wieder wirtschaftliche Dampfraten zur weiteren Unterdrückung der Stickoxidbildung. Bei Voll-Last des Kraftwerkes dominiert in der die Bildung von Stickoxyden hemmenden Wirkung damit die Heizwertabsenkung des Brenngases, und Dampf wird hauptsächlich zur Feineinstellung der tolerierten $NO_x$-Frachten im Abgas den einzelnen Gasturbinen dosiert zugeführt. Dabei wird vorteilhafterweise so vorgegangen, daß bei Mindestlast des Kraftwerkes, also bei Abarbeitung lediglich der Abgase der Reduktionsstufe mit einer Gasturbine dieser zur Minimierung der Stickoxidbildung vorwiegend Dampf zugeführt wird, wogegen bei Voll-Last des Kraftwerkes die Heizwertabsenkung im Brenngas durch Zumischung von Stickstoff in der die Bildung von Stickoxiden hemmenden Wirkung dominiert und Dampf hauptsächlich zur Feineinstellung der tolerierten $NO_x$-Frachten im Abgas den einzelnen Gasturbinen dosiert zugeführt wird.

Allerdings steigt damit der Brenngas-Massenstrom zu den Gasturbinen und folglich muß aus den Brennkammern der Gasturbinen weitere Druckluft abgezogen werden. Diese wird in der zuvor genannten Luftexpansionsturbine arbeitsleistend entspannt; der Hauptluftverdichter wird dadurch weiter entlastet. Weil die Arbeit dieser Expansionsturbine gleichsinnig mit dem Leistungsbedarf des Stickstoffverdichters ansteigt, wird zweckmäßigerweise diese Expansionsturbine mit dem Stickstoffverdichter auf einer Welle angeordnet und die kleine Differenzleistung durch einen Motor, zweckmäßigerweise bei variabler Drehzahl durch Frequenzumrichtung, aufgebracht. Bei Mindestlast des Gasturbinen-Dampfkraftwerkes, das heißt bei Betrieb nur mit dem Abgas der Reduktionsstufe, steht diese Maschinengruppe still. Die Durchführung des Verfahrens erfolgt dabei bevorzugt derart, daß der Verdichter für Stickstoff auf einer Welle mit der Turbine zur arbeitsleistenden Entspannung nach Druckluft im wesentlichen von dieser angetrieben wird, mit steigender Last des Kraftwerkes stetig zunehmenden Stickstoffmassenstrom fördert und fehlende Antriebsleistung von einem weiteren vorzugsweise drehzahlgeregelten Antrieb bezogen wird, welcher insbesondere als ein über Frequenzumrichter gespeister Drehstrommotor ausgebildet ist.

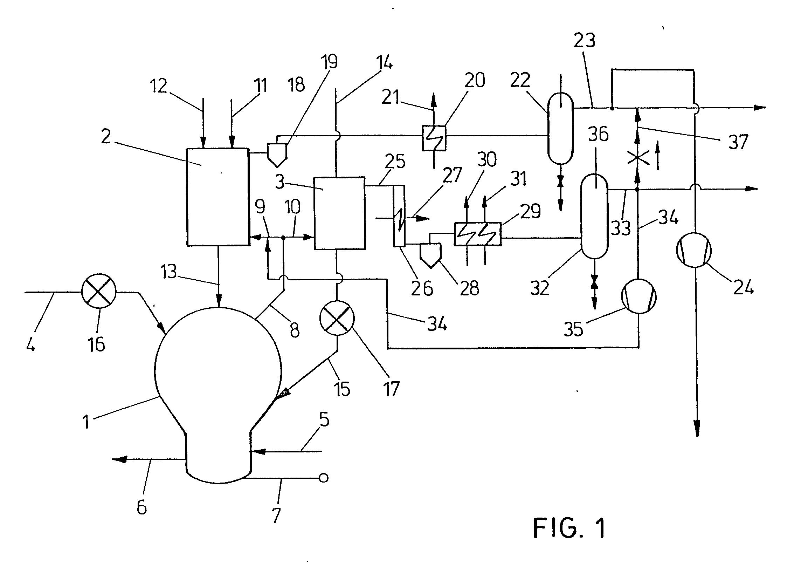

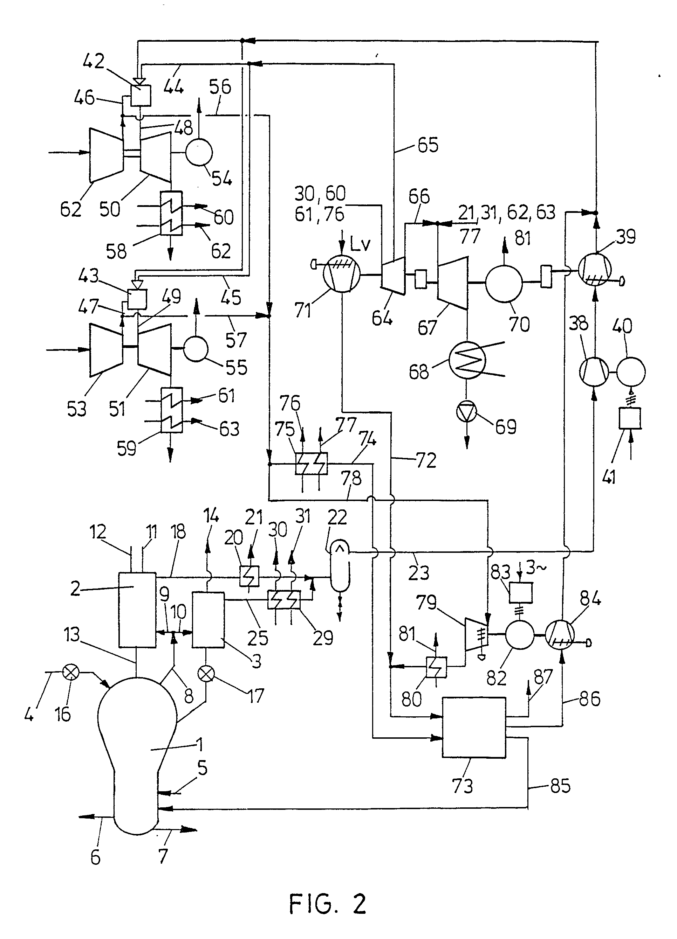

Die Erfindung wird nachfolgend an Hand von in der Zeichnung schematisch dargestellten Ausführungsbeispielen einer Anlage zur Durchführung des erfindungsgemäßen Verfahrens näher erläutert. In dieser zeigen Fig.1 eine erste Ausführungsform einer Anlage zur Durchführung des erfindungsgemäßen Verfahrens und Fig.2 eine abgewandelte Ausführungsform einer Anlage mit angeschlossenen Gasturbinen bzw. einer Luftzerlegungsanlage.

Im in Fig.1 dargestellten Blockschema ist mit 1 ein Einschmelzvergaser bezeichnet, welchem aus einer Vorreduktionsstufe 2 vorreduzierte, vorzugsweise eisenhaltige Erze sowie aus einem Entschwefelungsreaktor 3 Schlackenbildner zugeführt werden. Über eine Fördereinrichtung 4 wird dem Einschmelzvergaser 1 Kohle und über eine Leitung 5 sauerstoffhaltiges Brenngas bzw. reiner Sauerstoff zugeführt. Bei 6 wird aus dem Einschmelzvergaser 1 Roheisen und bei 7 Schlacke abgezogen.

Dem Einschmelzvergaser 1 wird über die Fördereinrichtung 4 Kohle in einer die für die Schmelzreduktion des zugeführten, insbesondere eisenhaltigen Erzes, benötigten Menge übersteigenden und variablen Menge zugeführt, um zusätzlich brennbares Gas zu erzeugen. Das gesamte erzeugte Gas wird im Bereich des Kopfes des Einschmelzvergasers über eine Leitung 8 abgezogen und in zwei Teilströme 9 und 10 geteilt, wobei der über 9 abgezogene Teilgasstrom der Vorreduktion 2 und der zweite Teilstrom, welcher die für die Vorreduktion benötigte Teilmenge des Gases übersteigt, dem Entschwefelungsreaktor 3 zugeführt wird. Der Vorreduktionsstufe 2 werden eisenhaltige Erze über eine Zuleitung 11 sowie Schlackenbildner, beispielsweise $CaCO_3$ und $MgCO_3$ über 12 zugeführt und es gelangen nach der Vorreduktion 2 über 13 im wesentlichen Fe und FeS mit Schlackenbildnern in den Einschmelzvergaser. Der Entschwefelungsstufe 3 werden über 14 ebenfalls Schlackenbildner $MgCO_3$ und $CaCO_3$ in einem vom Mengenverhältnis in der Vorreduktion 2 unterschiedlichen Mengenverhältnis zugeführt und es gelangt nach der Entschwefelung über 15 im wesentlichen CaO und CaS und MgO in den Einschmelzvergaser 1. Das aus dem Einschmelzvergaser 1 abgezogene Gas wird im wesentlichen von CO und $H_2$, mit kleineren Anteilen an $H_2S$, $CO_2$ und $H_2O$ gebildet. Für eine rasche Anpassung und Regelung der Mengenströme im Einschmelzvergaser 1 sind sowohl in der Zuführungsleitung 4 für die Kohle als auch in der Zuführungsleitung 15 regelbare Feststoffzuteiler 16 und 17 vorgesehen, wodurch eine kompensierende Korrektur durch gleichzeitige Veränderung der Brennstoffmenge und der gesondert zugeführten Menge an Schlackenbildnern aus dem Entschwefelungsreaktor 3 ermöglicht wird. Dies erlaubt die Aufrechterhaltung der metallurgisch notwendigen Schlackenbasizität.

Die Teilung des entstehenden brennbaren und aus dem Vergaserkopf abgezogenen Gasstromes in Teilströme 9 und 10 erfolgt dabei derart, daß der in der Vorreduktion 2 eingesetzte Gasstrom etwa 25 bis 95 % des gesamten erzeugten brennbaren Gasstromes beträgt. Um höhere Kohlenwasserstoffe aus der Entgasung der in den Einschmelzvergaser 1 aufgegebenen Kohle sowie bei der Entgasung bzw. Vergasung entstehende Kohlenstoff-Stickstoff-Verbindungen im Vergaserkopf thermisch zersetzen zu können, tritt das erzeugte brennbare Gas mit Temperaturen von über 1000°C aus.

Aus der Vorreduktionsstufe 2 wird über 18 brennbares, $CO_2$-reiches Gas abgezogen, welches in einem Fliehkraftabscheider 19 gereinigt wird und über einen Wärmetauscher 20 zur Erzeugung von Mitteldruckdampf 21 einem Wäscher 22 zugeführt wird, aus welchem bei 23 im wesentlichen gereinigtes und abgekühltes brennbares Gas abgezogen wird, welches beispielsweise einer Brennkammer einer Gasturbine zugeführt wird, wie dies unter Bezugnahme auf Fig.2 näher erläutert werden wird. Eine Teilmenge des bei 23 abgezogenen brennbaren Gases kann dabei über einen Verdichter 24 als sauerstoffhältiges Vergasungsmittel dem Einschmelzvergaser z.B. über die Leitung 5 oder getrennt vom Sauerstoffstrom zugeführt werden.

Aus dem Entschwefelungsreaktor 3 wird bei 25 ebenfalls ein brennbares, $CO_2$-armes Gas abgezogen, welches über einen Strahlungswärmetauscher 26 zur Erzeugung von Hochdruckdampf 27, über einen Fliehkraftabscheider 28 sowie über einen Wärmetauscher 29 zur Erzeugung von Hochdruckdampf 30 und Mitteldruckdampf 31 geführt wird und in einem Wäscher 32 gereinigt wird. Aus dem Wäscher 32 wird bei 33 ebenfalls gereinigtes, brennbares Gas abgezogen und kann, wie dies in Fig.2 näher erläutert werden wird, einer Gasturbine zugeführt werden. An die Leitung 33 ist eine Zweigleitung 34 angeschlossen, über welche das gereinigte und gekühlte brennbare Gas über einen Verdichter 35 dem in der Vorreduktionsstufe 2 eingesetzten Teilgasstrom 9 zugesetzt wird, um eine Kühlung dieses Teilgasstromes auf für die Vorreduktion geeignete Temperaturen von etwa 850°C zu bewirken. Weiters besteht zwischen den Brenngasleitungen 23 und 33 eine über ein Ventil 36 regelbare Zweigleitung 37, so daß das Verhältnis der über den Vorreduktionsschacht 2 bzw. über den Entschwefelungsschacht 3 geführten Teilgasströme beeinflußt werden kann.

Bei dem in Fig.2 dargestellten Ausführungsbeispiel sind für gleiche Bauteile die Bezugzeichen der Fig.1 beibehalten worden. In dem Einschmelzvergaser 1 wird wiederum brennbares Gas erzeugt, welches in zwei Teilströmen 9 und 10 der Vorreduktion 2 als auch der Entschwefelungsstufe 3 zugeführt werden, wobei das aus der Vorreduktion 2 bzw. aus der Entschwefelungsstufe 3 abgezogene Gas wiederum in Wärmetauschern 20 und 29 abgekühlt und zur Erzeugung von Hochdruckdampf bzw. Mitteldruckdampf herangezogen wird. Abweichend von der Ausbildung gemäß Fig.1 ist für die abgekühlten Gasströme in den Leitungen 18 und 25 ein gemeinsamer Wäscher 22 vorgesehen und es wird das gesamte gereinigte, brennbare Gas über die Leitung 23 abgezogen. In die Leitung 23, welche das brennbare Gas zu einer bzw. mehreren Gasturbinen führt, ist ein Gasvorverdichter 38 sowie ein nachgeschalteter Gasverdichter 39 eingeschaltet, wobei der Gasvorverdichter 38 von einem übersynchronen Antriebsmotor 40 angetrieben wird, welcher von einem Frequenzumrichter 41 gespeist wird. Das derart verdichtete, brennbare Gas wird darauf Brennkammern 42 und 43 zugeführt. In den Brennkammern 42, 43 wird das gereinigte und verdichtete Brenngas mit verdichteter Luft 46 und 47 verbrannt, wobei die aus den Brennkammern 42 und 43 abgezogenen Abgase 48 und 49 jeweils einer Turbine 50 bzw. 51 zugeführt werden. Diese Turbinen 50 und 51 sind einerseits mit jeweils einem Verdichter 52 und 53 sowie mit Generatoren 54 und 55 zur Erzeugung von elektrischer Energie gekoppelt, wie dies schematisch angedeutet ist. Derartige Systeme von gekoppelten Verdichtern 52 und 53, Turbinen 50 und 51 sowie Generatoren 54 und 55 mit jeweils zugeordneten Brennkammern 42 und 43 zur Verbrennung der für den Betrieb der Turbinen 50 und 51 erforderlichen Gase sind meist für den Einsatz von Erdgas bzw. Erdöl als Einsatzmittel in den Brennkammern ausgelegt. Da das aus dem Einschmelzvergaser nach Passieren der Vorreduktions stufe 2 bzw. der Entschwefelungsstufe 3 abgezogene brennbare Gas im allgemeinen einen geringeren Heizwert als Erdöl bzw. Erdgas aufweist und somit eine größere Produktgasmenge zur Erzeugung des für den Betrieb der Turbinen 50 und 51 nötigen Gasstromes 23 erforderlich ist, bestünde prinzipiell die Möglichkeit, die eingesetzte Menge verdichteter Luft 46 und 47 durch Modifikationen der Verdichter 52 und 53 zu reduzieren und dem Schluckvermögen der Turbinen 50 und 51 anzupassen. Derartige Modifikationen von Verdichtern erweisen sich jedoch im allgemeinen auch hinsichtlich anderer Bauteile der Gasturbinen als problematisch, so daß Teilströme 56 und 57 den Strömen verdichteter heißer Luft entnommen werden und, wie dies in der Folge noch genauer erläutert werden wird, einer Luftzerlegungsanlage zugeführt werden.

Das aus den Turbinen 50 und 51 abgezogene, entspannte Gas wird über Wärmetauscher 58 und 59 geführt, in welchen Hochdruckdampf 60 und 61 bzw. Mitteldruckdampf 62 und 63 sowie, hier nicht näher gezeigt, zusätzlich Niederdruckdampf erzeugt oder Speisewasser vorgewärmt wird.

Der in den unterschiedlichen Wärmetauschern erzeugte Hochdruckdampf 30, 60, 61 und 76 wird einer Hochdruck-Dampfturbine 64 zugeführt, aus welcher auf einem mittleren Druckniveau Dampf über eine Leitung 65 abgezogen werden kann, wobei dieser Dampf den Brennkammern 42 und 43 der Gasturbinen zur Unterdrückung der $NO_x$-Bildung zugeführt wird. Der aus der Turbine 64 abgezogene Mitteldruckdampf 66 sowie die in den unterschiedlichen Wärmetauschern erzeugten Mitteldruckdampfströme 21, 31, 62, 63, 77 und 81 werden einer nachgeschalteten Dampfturbine 67 zugeführt und nach der Entspannung über einen Kondensator 68 kondensiert und das Kondensat über eine Pumpe 69 in den Kreislauf zurückgefördert. Die Dampfturbinen sind dabei mit einem Generator 70 gekoppelt, welcher weiters mit dem Gasverdichter 39 für das brennbare Gas gekoppelt ist.

Die Dampfturbine 64 ist weiters mit einem Luftverdichter 71 zur Erzeugung von Mitteldruckluft 72 gekoppelt, welche einer Luftzerlegungsanlage 73 zugeführt wird.

Neben der im Luftverdichter 71 verdichteten Luft wird der Luftzerlegungsanlage 73 auch ein Teilstrom der aus den Verdichtern 52 und 53 der Brennkammern 42 und 43 bei 56 und 57 abgezogenen Hochdruckluft zugeführt, wobei davon ein Teilstrom 74 über einen Wärmetauscher 75 zur Erzeugung von Hochdruckdampf und Mitteldruckdampf 76 und 77 abgekühlt wird. Diese Dampfströme unterschiedlichen Druckes werden, wie zuvor gezeigt, ebenfalls den Dampfturbinen 64 bzw. 67 zugeführt. Diese Luft wird im Luftzerleger im Wärmeaustausch von zuvor flüssig verdichtetem und dabei verdampfendem Sauerstoff verflüssigt und so der Zerlegungskolonne zugeführt. Damit ist dieser Luftstrom durch den Massenstrom des entnommenen Sauerstoffes klar definiert. Bei Voll-Last des Kraftwerkes ist es aber zweckmäßig, den Brennkammern 42 und 43 deutlich mehr Luft, als Teilstrom 78, zu entnehmen.

Der nicht über den Wärmetauscher 75 geführte Teilstrom 78 der Hochdruckluft wird in einer Hochdruckluft-Expansionsturbine 79 arbeitsleistend entspannt und nach einer Kühlung in einem Wärmetauscher 80 unter gleichzeitiger Erzeugung von Mitteldruckdampf 81, welcher ebenfalls in der Dampfturbine 67 abgearbeitet wird, der vom Verdichter 71 gelieferten Mitteldruckluft zugeführt und ebenfalls in die Luftzerlegungsanlage 73 eingebracht. Die Expansionsturbine 79 ist dabei auf einer Welle mit einem Motor 82 mit einem Frequenzumrichter 83 sowie einem Stickstoffverdichter 84 angeordnet. In der Luftzerlegungsanlage 73 erzeugter Sauerstoff wird über eine Leitung 85 dem Einschmelzvergaser als Vergasungsmittel zugeführt, wobei wie oben erwähnt neben dem reinen Sauerstoff weitere inerte oder sauerstoffhaltige Gase dem Einschmelzvergaser 1 zugeführt werden können, wie dies durch die Leitung 5 angedeutet ist. In der Luftzerlegungsanlage 73 erzeugter Stickstoff wird über 86 abgezogen und nach einer Verdichtung im Stickstoffverdichter 84 dem den Brennkammern 42 und 43 zuzuführenden brennbaren Gas zugemischt, wobei diese Zumischung von Stickstoff in das in den Brennkammern zu verarbeitende, brennbare Gas im wesentlichen bei Voll-Last des Gasturbinen-Dampfkraftwerkes die Heizwertabsenkung im Brenngas bewirkt, während die Zumischung von Dampf in die Brennkammern der Gasturbinen der Minimierung der Stickoxidbildung bei Teillast des Kraftwerkes und Betrieb mit nur einer Gasturbine dient. Derart enthält der Luftzerleger bei Voll-Last des Kraftwerkes nicht nur insgesamt mehr zu zerlegende Luft; es steigt insbesondere der Anteil der aus den Gasturbinen entnommenen verdichteten Luft.

Mit 87 ist die Ableitung des stickstoffreichen Abproduktes der Luftzerlegungsanlage 73 angedeutet.

**Ansprüche**

1. Verfahren zur Erzeugung von brennbaren Gasen in einem mit Sauerstoff bzw. mit Sauerstoff angereicherter Luft betriebenen Einschmelzvergaser (1), in welchen vorreduzierte, vorzugsweise eisenhaltige Erze (13), Kohle (4) und Schlackenbildner (15) eingebracht werden und aus welchem Schmelze (6), flüssige Schlacke (7) sowie brennbares Gas (8) abgezogen werden, wobei Kohle (4) in einer die für die Schmelzreduktion benötigte Menge übersteigenden und variablen Menge zur Erzeugung von brennbaren Gasen (8) eingesetzt wird, dadurch gekennzeichnet, daß das erzeugte Gas in wenigstens zwei Teilströme (9, 10) geteilt wird, daß ein erster Teilstrom (9) des erzeugten brennbaren Gases zur Vorreduktion (2) des dem Einschmelzvergaser (1) zuzuführenden Erzes (13) eingesetzt wird und daß der die für die Vorreduktion (2) benötigte Teilmenge des Gases übersteigende Anteil des brennbaren Gases einem Entschwefelungsreaktor (3) zugeführt wird, aus welchem die Umsetzungsprodukte der Entschwefelungsreduktion sowie nicht vollständig umgesetzte Schlackenbildner abgezogen und dem Einschmelzvergaser (1) als Schlackenbildner (15) zugeführt werden.

2. Verfahren nach Anspruch 1, dadurch gekennzeichnet, daß der Strom der Kohle (4) zum Einschmelzvergaser (1) und der Strom der Feststoffe vom Entschwefelungsreaktor (3) zum Einschmelzvergaser (1) über regelbare Feststoffzuteiler (16, 17) in mengenmäßige Abhängigkeit voneinander eingestellt werden.

3. Verfahren nach Anspruch 1 oder 2, dadurch gekennzeichnet, daß dem Entschwefelungsreaktor (3) $MgCO_3$ und $CaCO_3$ in einem Mengenverhältnis zugeführt wird, welches von dem Mengenverhältnis, welches bei der Vorreduktion (2) aufgegeben wird, verschieden ist.

4. Verfahren nach Anspruch 1, 2 oder 3, dadurch gekennzeichnet, daß der Teilmenge (9) des Gases, welche der Vorreduktion (2) zugeführt wird, nach dem Entschwefelungsreaktor (3) abgezogenes, gekühltes und gereinigtes brennbares Gas zugemischt wird.

5. Verfahren nach einem der Ansprüche 1 bis 4, dadurch gekennzeichnet, daß das den Entschwefelungsreaktor (3) verlassende Gas (25) in einem Strahlungswärmetauscher (26) unter Erzeugung von Hochdruckdampf (27) vorgekühlt, in einem Fliehkraftabscheider (28) entstaubt, in Konvektionswärmetauschern (29) unter Erzeugung von Hochdruckdampf (30) und Mitteldruckdampf (31) weiter abgekühlt, in einer letzten Stufe (32) durch Wärmeabgabe an Niederdruckdampf oder Speisewasser endgekühlt und anschließend gewaschen wird.

6. Verfahren nach einem der Ansprüche 1 bis 5, dadurch gekennzeichnet, daß der in der Vorreduktion (2) eingesetzte Teilgasstrom (9), nach Verlassen des Reduktionsschachtes in Fliehkraftabscheidern (19) entstaubt, in Konvektionswärmetauschern (20) unter Erzeugung von Mitteldruckdampf (21) gekühlt, in einer weiteren Kühlstufe (22) unter Wärmeabgabe an Niederdruckdampf oder Speisewasser endgekühlt und abschließend gewaschen wird.

7. Verfahren nach einem der Ansprüche 1 bis 6, dadurch gekennzeichnet, daß der für die Vorreduktion (2) eingesetzte Teilgasstrom (9) auf etwa 850 °C gekühlt wird.

8. Verfahren nach einem der Ansprüche 1 bis 7, dadurch gekennzeichnet, daß der in der Vorreduktion (2) eingesetzte Gasstrom (9) 25 bis 95%, vorzugsweise 40 bis 80%, des erzeugten brennbaren Gasstromes beträgt.

9. Verfahren nach einem der Ansprüche 1 bis 8, dadurch gekennzeichnet, daß der Feststoffstrom der aus dem Entschwefelungsreaktor (3) abgezogenen und dem Einschmelzvergaser (1) zugeführten Schlackenbildner (15) so eingestellt wird, daß die Schlacke (7) dieselbe Schlackenbasizität ergibt wie die primäre Schlacke, welche aus der Kohleasche, den Erzbegleitern, sowie den mit dem Erz (13) in die Vorreduktion (2) aufgegebenen stückigen, vorzugsweise karbonatischen Schlackenbildnern gebildet wird.

10. Verfahren nach einem der Ansprüche 1 bis 9, dadurch gekennzeichnet, daß als Vergasungsmittel in den Einschmelzvergaser (1) reiner Sauerstoff und/oder Sauerstoff mit Reststickstoffgehalten um 10 % und/oder ein $O_2$-Wasserdampfgemisch und/oder ein Gemisch aus Heißluft und $O_2$ und/oder neben Sauerstoff als weiterer Sauerstoffträger in rezirkuliertem Abgas aus der Reduktionsstufe enthaltenes $CO_2$ eingesetzt wird.

11. Verfahren nach einem der Ansprüche 1 bis 10, dadurch gekennzeichnet, daß bei Einsatz von Abgas aus der Vorreduktionsstufe (9) als Vergasungsmittel die fühlbare Wärme des Gases über jenem Temperaturniveau, das zur Zerlegung von CH- bzw. CN-Verbindungen im Vergaserraum (1) notwendig ist, insbesondere 1.000 °C, verbraucht und in Heizwert des erzeugten Gases umgesetzt wird.

12. Verfahren nach einem der Anprüche 1 bis 11, dadurch gekennzeichnet, daß bei Einsatz von Heißluft und $O_2$ als Vergasungsmittel in den Einschmelzvergaser (1) die Heißluft durch Wärmeaustausch gegen heiße Gase oder durch Verbrennung einer kleinen Brennstoff-, vorzugsweise Gasmenge in dem dem Vergaser zuzuführenden Luftstrom erwärmt wird.

13. Verfahren nach einem der Ansprüche 1 bis 12, dadurch gekennzeichnet, daß das erzeugte Gas größtenteils einem Gasturbinen-Dampfkraftwerk (42, 43, 50, 51, 54, 55) zugeführt wird, wobei bei Mindestlast in diesem Kraftwerk die brenn baren Abgase aus der Reduktionsstufe teilweise oder zur Gänze in der (den) Brennkammer(n) (42, 43) einer Gasturbine (50, 51) verfeuert werden, aus deren heißen Abgasen Dampf erzeugt wird, welcher in einer Dampfturbine (64, 67) gemeinsam mit Dampf aus der Kühlung heißer Gasströme verarbeitet wird, und wobei bei Voll-Last des Kraftwerkes zusätzlich das aus der Vergasung nicht für den Betrieb der Reduktionsstufe notwendiger Kohle herrührende Gas überwiegend oder zur Gänze zur Stromerzeugung verwendet wird, und daß dazu mindestens eine weitere Gasturbine betrieben wird.

14. Verfahren nach Anspruch 13, dadurch gekennzeichnet, daß das brennbare Gas der (den) Brennkammer(n) (42, 43) einer (den) Gasturbine(n) (50, 51) durch einen Gasverdichter (53, 62) zugeführt wird, der bei Voll-Last des Kraftwerkes durch einen vorzugsweise drehzahlgeregelten Gasvorverdichter (38) unterstützt wird.

15. Verfahren nach Anspruch 13 oder 14, dadurch gekennzeichnet, daß der drehzahlgeregelte Gasvorverdichter (38) bei Voll-Last des Gasturbinen-Dampfkraftwerkes etwa 20% der gesamten Verdichterarbeit leistet.

16. Verfahren nach einem der Ansprüche 13 bis 15, dadurch gekennzeichnet, daß aus der (den) Brennkammer(n) (42, 43) der Gasturbine(n) (50, 51) Druckluft (56, 57) entnommen, gekühlt und zur Gänze der Luftzerlegungsanlage (73) zugeführt wird, wobei dieser mindestens bei Voll-Lastbetrieb des Kraftwerkes ein Teilstrom dieser Luft, vorzugsweise in einer arbeitsleistenden Turbine (79), auf das Druckniveau entspannt wird, das zur Erzeugung praktisch druckloser Produkte in der Luftzerlegungsanlage (73) notwendig ist, und wobei dieser teilentspannte Druckluftstrom der Luftzerlegung (73) gemeinsam mit einem weiteren Druckluftstrom (72) der Luftzerlegungsanlage (73) zugeführt wird, den ein weiterer, vorzugsweise von der Dampfturbine (64) angetriebener Luftverdichter (71) auf ein zur Luftzerlegung (73) notwendiges Druckniveau fördert.

17. Verfahren nach Anspruch 16, dadurch gekennzeichnet, daß der Teilstrom an aus der (den) Brennkammer(n) (42, 43) der Gasturbine(n) (50, 51) entnommenen Druckluft (56, 57), der nicht über die arbeitsleistende Turbine (79) entspannt wird, im Luftzerleger (73) im Gegenstrom zu flüssig verdichtetem Sauerstoff kondensiert, als Flüssigkeit entspannt und in den Sumpf der Zerlegungskolonne des Luftzerlegers eingespeist wird.

18. Verfahren nach einem der Ansprüche 13 bis 17, dadurch gekennzeichnet, daß dem der (den) Brennkammer(n) (42, 43) der Gasturbine(n) (50, 51) zuzuführenden Brenngas oder den Brennern Dampf zugeführt und/oder dem Brenngas verdichteter Stickstoff (86) aus der Luftzerlegung (73) beigemischt wird.

19. Verfahren nach einem der Ansprüche 13 bis 18, dadurch gekennzeichnet, daß bei Mindestlast des Kraftwerkes, also bei Abarbeitung lediglich der Abgase der Reduktionsstufe (2) mit einer Gasturbine dieser zur Minimierung der Stickoxidbildung vorwiegend Dampf zugeführt wird, wogegen bei Voll-Last des Kraftwerkes die Heizwertabsenkung im Brenngas durch Zumischung von Stickstoff in der die Bildung von Stickoxiden hemmenden Wirkung dominiert und Dampf hauptsächlich zur Feineinstellung der tolerierten $NO_x$-Frachten im Abgas den einzelnen Gasturbinen (50, 51) dosiert zugeführt wird.

20. Verfahren nach einem der Ansprüche 13 bis 19, dadurch gekennzeichnet, daß der Verdichter (84) für Stickstoff (85) auf einer Welle mit der Turbine (79) zur arbeitsleistenden Entspannung nach Druckluft (78) im wesentlichen von dieser angetrieben wird, mit steigender Last des Kraftwerkes stetig zunehmenden Stickstoffmassenstrom fördert und fehlende Antriebsleistung von einem weiteren vorzugsweise drehzahlgeregelten Antrieb (82) bezogen wird, welcher insbesondere als ein über Frequenzumrichter (83) gespeister Drehstrommotor ausgebildet ist.

FIG. 1

EP 0 388 395 A1

FIG. 2

<table>
<tr><td>Europäisches Patentamt</td><td>EUROPÄISCHER RECHERCHENBERICHT</td><td>Nummer der Anmeldung<br>EP 90 89 0037</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 530 240 (VOEST-ALPINE)<br>* Seite 9, Zeile 20 - Seite 11, Zeile 23 *<br>--- | 1 | C 10 J 3/57<br>C 21 B 13/14 |
| Y<br><br>A | DE-B-1 167 368 (DEMAG-ELEKTROMETAL)<br>* Spalte 4, Zeilen 12-64 *<br><br>--- | 1<br><br>2 | |
| A | EP-A-0 143 986 (KRUPP)<br>* Seite 4, Zeile 16 - Seite 7, Zeile 26 *<br>--- | 1 | |
| A | EP-A-0 269 609 (KORF ENGIN.)<br>* Spalte 4, Zeile 29 - Spalte 9, Zeile 43 *<br>--- | 13,18 | |
| A | DE-A-3 630 455<br>(KLÖCKNER-HUMBOLDT-DEUTZ)<br>* Spalte 1, Zeile 1 - Spalte 2, Zeile 16 *<br>--- | 1,7 | |
| A | DE-A-2 133 860 (BARKER)<br>----- | | RECHERCHIERTE SACHGEBIETE (Int. Cl.5)<br><br>C 10 J<br>C 21 B |

Der vorliegende Recherchenbericht wurde für alle Patentansprüche erstellt

| Recherchenort | Abschlußdatum der Recherche | Prüfer |
|---|---|---|
| DEN HAAG | 12-04-1990 | WENDLING J.P. |